# FASCICULE DE BREVET EUROPEEN

(11) **EP 2 490 505 B1**
(45) Date de publication et mention de la délivrance du brevet: **29.06.2016**
(21) Numéro de dépôt: 12156020.5
(22) Date de dépôt: 17.02.2012
(51) Int. Cl.: H05B 6/12

(54) **Foyer de cuisson à induction et table de cuisson à induction associée**
Induktionskochherd und entsprechendes Induktionskochfeld
Induction unit and associated induction cooktop

(30) Priorité: 21.02.2011 FR 1100531
(43) Date de publication de la demande: 22.08.2012
(73) Titulaire: Groupe Brandt, 92500 Rueil-Malmaison (FR)
(72) Inventeur: Roux, Alain, 45160 Saint Hilaire - Saint Mesmin (FR)

(56) Documents cités:
- DE-A1-102010 030 392
- JP-A- 2010 262 884
- US-A- 4 296 295
- US-A- 4 453 067

## Description

La présente invention concerne un foyer de cuisson à induction comprenant un inducteur.

Plus particulièrement, l'invention concerne le bobinage d'un conducteur d'un inducteur.

On connaît déjà des foyers de cuisson à induction comprenant un inducteur, où l'inducteur comprend un conducteur enroulé en forme de spirale plane. Le conducteur est formé par un toron de fils électriquement conducteurs.

Classiquement, ces foyers de cuisson à induction créent des courants électriques induits dans le fond du récipient placé au-dessus dudit foyer.

On connaît également le document US 4 296 295 qui décrit un foyer de cuisson à induction comprenant un inducteur.

L'inducteur comporte un conducteur enroulé en forme de spirale plane. La spirale du conducteur comprend deux sections de spires. Et chacune des deux sections de spires comprend une pluralité de spires espacées d'un pas d'enroulement constant.

Ce conducteur est enroulé sur lui-même sous la forme d'une spirale plane, circulaire et concentrique.

En outre, le pas d'enroulement de la première section de spires interne est supérieur au pas d'enroulement de la deuxième section de spires externe. La largeur du pas d'enroulement de la première section de spires interne est obtenue en positionnant une bande d'un matériau isolant électrique entre chaque spire de cette première section de spires interne. Et la largeur du pas d'enroulement de la deuxième section de spires externe est obtenue en enroulant les différentes spires les unes contre les autres de sorte à être jointives.

Cependant, l'inducteur de ce foyer de cuisson à induction présente l'inconvénient que la première section de spires interne comprend une pluralité de spires espacées d'un pas d'enroulement constant supérieur au pas d'enroulement constant de la deuxième section de spires externe.

Par conséquent, la répartition de chaleur dans le récipient n'est pas uniforme puisque la densité de courants électriques induits au niveau d'une couronne centrale de fond d'un récipient est inférieure à la densité de courants électriques induits au niveau d'une couronne externe de fond du récipient.

La quantité de chaleur fournie au niveau d'une couronne centrale de fond du récipient est inférieure à la quantité de chaleur fournie au niveau d'une couronne externe de fond du récipient puisque d'une part, selon le principe de l'électromagnétisme, aucun courant électrique induit n'est généré au centre d'un tel inducteur, et les spires du conducteur disposées au centre de l'inducteur engendrent des courants électriques induits faibles étant donné le faible diamètre de ces spires, et d'autre part le conducteur de l'inducteur est enroulé sur une première section de spires interne comprenant une pluralité de spires espacées d'un pas d'enroulement constant supérieur au pas d'enroulement constant de la deuxième section de spires externe.

On connaît également le document US 4 453 067 A qui décrit une bobine de chauffage à induction pour un appareil de cuisson. La bobine de chauffage à induction est réalisée sous la forme d'une spirale plate d'un fil électriquement conducteur. Les enroulements de la bobine de chauffage à induction sont disposés en quatre sections radialement liées, comprenant une section de spires externe, une section de spires interne et deux sections de spires intermédiaires. Le pas d'enroulement des sections de spires externe et interne est similaire. Le pas d'enroulement des sections de spires intermédiaire est similaire au pas d'enroulement des sections de spires externe et interne. Et le nombre de spires des sections de spires interne et externe est identique.

La présente invention a pour but de résoudre les inconvénients précités et de proposer un foyer de cuisson à induction, et une table de cuisson à induction associée, permettant de distribuer une densité de courants électriques induits associée à chaque zone de fond du récipient de sorte à optimiser la répartition de chaleur sur toute la surface de fond d'un récipient.

A cet effet, la présente invention vise, selon un premier aspect, un foyer de cuisson à induction comprenant un inducteur, ledit inducteur comportant un conducteur enroulé en forme de spirale plane, ladite spirale dudit conducteur comprenant des sections de spires, une pluralité desdites sections de spires comprenant respectivement plusieurs spires espacées d'un pas d'enroulement constant, le pas d'enroulement constant d'une section de spires est variable par rapport à au moins une autre section de spires.

Selon l'invention, des sections de spires interne et externe de ladite spirale dudit conducteur situées respectivement en partie centrale dudit inducteur et en périphérie dudit inducteur comprennent une pluralité de spires espacées d'un pas d'enroulement constant et inférieur au pas d'enroulement constant respectif d'une pluralité de sections de spires intermédiaires de ladite spirale dudit conducteur, lesdites sections de spires intermédiaires de ladite spirale dudit conducteur étant disposée entre lesdites sections de spires interne et externe de ladite spirale dudit conducteur. Le pas d'enroulement constant desdites sections de spires interne et externe de ladite spirale dudit conducteur est identique. Et ladite section de spires externe de ladite spirale dudit conducteur comprend un nombre de spires supérieur par rapport au nombre de spires de ladite section de spires interne de ladite spirale dudit conducteur.

Ainsi, le foyer de cuisson à induction comprenant un tel inducteur permet de distribuer une densité de courants électriques induits associée à chaque zone de fond du récipient de sorte à optimiser la répartition de chaleur sur toute la surface de fond d'un récipient.

La section de spires interne de la spirale du conducteur, située en partie centrale de l'inducteur comprenant une pluralité de spires espacées d'un pas d'enroulement constant inférieur au pas d'enroulement constant respectif d'une pluralité de sections de spires intermédiaires, permet d'augmenter la densité de courants électriques induits au niveau d'une couronne centrale de fond d'un récipient par rapport à une couronne intermédiaire du fond de récipient disposée entre la couronne centrale et une couronne externe de fond du récipient.

De cette manière, la quantité de chaleur fournie au niveau d'une couronne centrale de fond du récipient est supérieure à la quantité de chaleur fournie au niveau d'une couronne intermédiaire de fond du récipient de sorte d'une part à palier à la densité de courants électriques induits quasi nulle au centre de l'inducteur puisque, selon le principe de l'électromagnétisme, aucun courant électrique induit n'est généré au centre d'un tel inducteur, et les spires du conducteur disposées au centre de l'inducteur engendrent des courants électriques induits faibles étant donné le faible diamètre de ces spires, et d'autre part à diffuser la chaleur par conductivité thermique sur toute la couronne centrale de fond du récipient puis sur la couronne intermédiaire de fond du récipient.

La section de spires externe de la spirale du conducteur, située en périphérie de l'inducteur comprenant une pluralité de spires espacées d'un pas d'enroulement constant inférieur au pas d'enroulement constant respectif d'une pluralité de sections de spires intermédiaires, permet d'augmenter la densité de courants électriques induits au niveau d'une couronne externe de fond d'un récipient par rapport à une couronne intermédiaire du fond de récipient disposée entre une couronne centrale et la couronne externe de fond du récipient.

De cette manière, la quantité de chaleur fournie au niveau d'une couronne externe de fond du récipient est supérieure à la quantité de chaleur fournie au niveau d'une couronne intermédiaire de fond du récipient de sorte d'une part à palier aux pertes de chaleur provoquées par le rebord périphérique du récipient, et d'autre part à diffuser la chaleur par conductivité thermique sur toute la couronne externe de fond du récipient puis sur la couronne intermédiaire de fond du récipient.

La pluralité de sections de spires intermédiaires de la spirale du conducteur, située en partie intermédiaire de l'inducteur comprenant respectivement une ou plusieurs spires espacées d'un pas d'enroulement constant supérieur au pas d'enroulement constant des sections de spires interne et externe de la spirale du conducteur situées respectivement en partie centrale de l'inducteur et en périphérie de l'inducteur, permet de répartir la densité de courants électriques induits au niveau d'une couronne intermédiaire de fond d'un récipient depuis une densité de courants électriques induits au niveau d'une couronne centrale de fond du récipient jusqu'à une densité de courants électriques induits au niveau d'une couronne externe de fond du récipient.

De cette manière, la quantité de chaleur fournie au niveau d'une couronne intermédiaire de fond du récipient est inférieure à la quantité de chaleur fournie au niveau d'une couronne centrale et d'une couronne externe de fond du récipient de sorte à uniformiser la répartition de chaleur sur toute la surface de fond du récipient en prenant en considération la diffusion de chaleur par conductivité thermique provenant de la couronne centrale et de la couronne externe de fond du récipient.

Préférentiellement, la densité de courants électriques induits entre une première section de spires intermédiaire de la spirale du conducteur, ladite première section de spires intermédiaire étant adjacente à la section de spires interne de la spirale du conducteur, et la section de spires externe de la spirale du conducteur est croissante.

Ainsi, la quantité de chaleur fournie par la première section de spires intermédiaire de la spirale du conducteur est inférieure à la quantité de chaleur fournie par la section de spires interne de la spirale du conducteur et la quantité de chaleur fournie par les sections de spires intermédiaires suivantes est croissante jusqu'à la section de spires externe de la spirale du conducteur de sorte à uniformiser la répartition de chaleur sur toute la surface de fond du récipient en prenant en considération la diffusion de chaleur par conductivité thermique provenant de la couronne centrale et de la couronne externe de fond du récipient.

La présente invention vise, selon un second aspect, une table de cuisson à induction comprenant au moins un foyer de cuisson à induction conforme à l'invention.

Cette table de cuisson à induction présente des caractéristiques et avantages analogues à ceux décrits précédemment en relation avec le foyer de cuisson à induction selon l'invention.

D'autres particularités et avantages de l'invention apparaîtront encore dans la description ci-après.

Aux dessins annexés, donnés à titre d'exemples non limitatifs :
- la figure 1 est une vue schématique éclatée d'un foyer de cuisson conforme à un mode de réalisation de l'invention, où le support d'inducteur comprend une partie écorchée de sorte à faciliter la visualisation du passage de la deuxième extrémité libre du conducteur de l'inducteur ;
- la figure 2 est une vue schématique partielle en coupe d'une table de cuisson à induction conforme à un mode de réalisation de l'invention ;
- la figure 3 est une vue schématique de dessus d'un support d'inducteur conforme à un mode de réalisation de l'invention ;

- la figure 4 est une vue schématique de dessous d'un support d'inducteur conforme à un mode de réalisation de l'invention ; et
- la figure 5 est une vue schématique d'une spirale d'un conducteur d'un inducteur conforme à un mode de réalisation de l'invention.

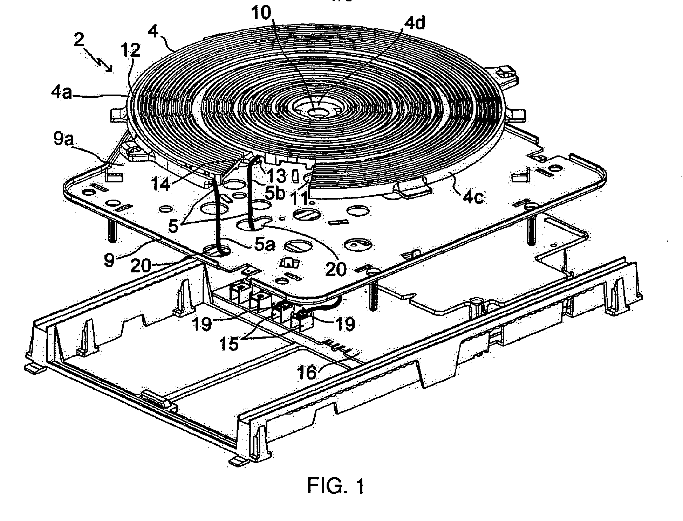

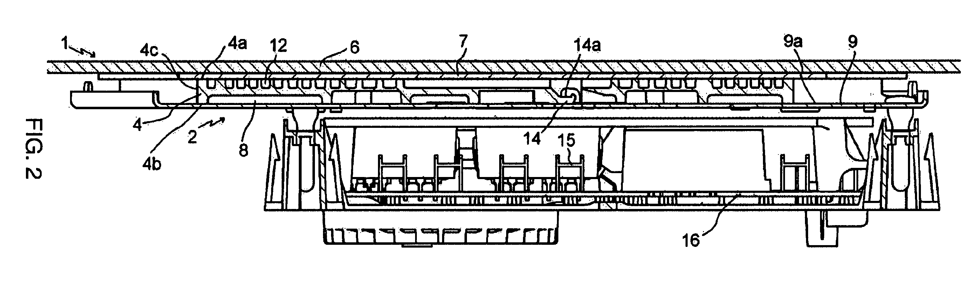

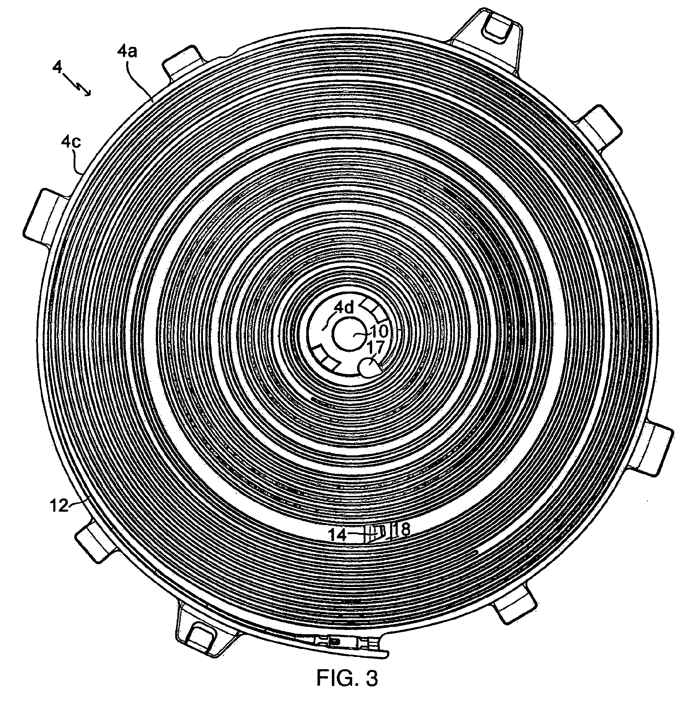

On va décrire tout d'abord, en référence aux figures 1 à 5, une table de cuisson à induction conforme à un mode de réalisation de l'invention.

La table de cuisson à induction 1 comprend un ou plusieurs foyers de cuisson à induction 2.

Chaque foyer de cuisson à induction 2 comprend un inducteur 3.

L'inducteur 3 du foyer de cuisson à induction 2 constitue un moyen de chauffage.

L'inducteur 3 comporte un conducteur 5 enroulé en forme de spirale plane. Le conducteur 5 de l'inducteur 3 est formé, tel que classiquement, par un toron de fils électriquement conducteurs.

L'inducteur 3 est placé sous une plaque de cuisson 6, pouvant être par exemple en vitrocéramique, destinée à recevoir un ou plusieurs récipients à chauffer.

Dans un mode de réalisation, l'inducteur 3 peut être séparé de la plaque de cuisson 6 par une couche d'isolant thermique 7, tel que par exemple un papier céramique et/ou une couche de laine de verre, de sorte à protéger l'inducteur 3 des échauffements du ou des récipients.

Dans un mode de réalisation, le foyer de cuisson à induction 2 comprend un support d'inducteur 4. Le support d'inducteur 4 comporte sur sa face supérieure 4a une gorge 12 en forme de spirale recevant le conducteur 5.

Le support d'inducteur 4 comporte un matériau magnétique permettant de focaliser le champ magnétique créé par l'inducteur 3 vers le récipient à chauffer.

Préférentiellement, le support d'inducteur 4 comprend une pluralité de barreaux 8 en matériau magnétique, en particulier des ferrites, maintenus radialement sur la face inférieure 4b du support d'inducteur 4.

Ici et de manière nullement limitative, le support d'inducteur 4 est réalisé en matière plastique pouvant être chargée de particules thermiquement conductrices.

A titre d'exemple nullement limitatif, les barreaux 8 en matériau magnétique peuvent être disposés à l'intérieur d'encoches radiales ménagées sur la face inférieure 4b du support d'inducteur 4.

La disposition des barreaux 8 en matériau magnétique et la surface de recouvrement de ces barreaux 8 par rapport à la surface de la spirale du conducteur 5 permettent d'adapter l'impédance d'un inducteur 3 ainsi que la densité des courants électriques induits engendrés par l'inducteur 3.

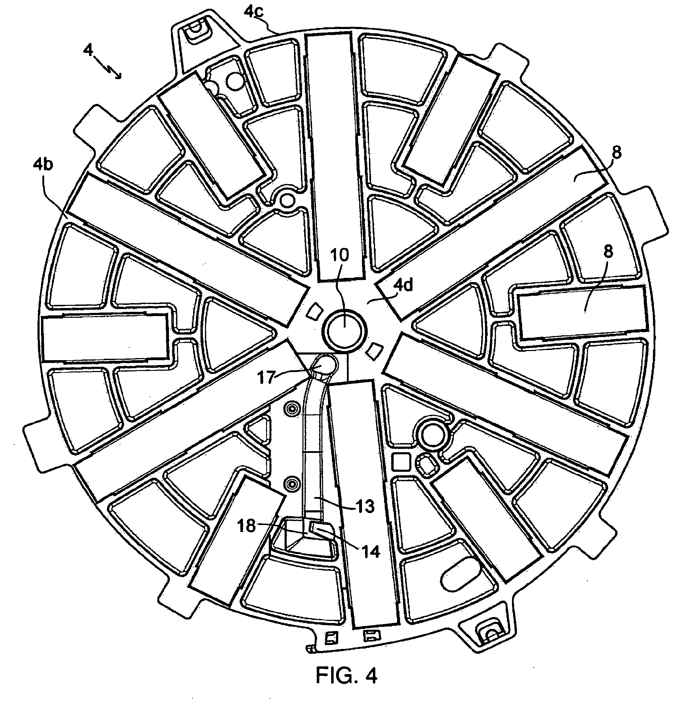

Ici et de manière nullement limitative, tel qu'illustré à la figure 4, le foyer de cuisson à induction 2 comprend six premiers barreaux 8 en matériau magnétique s'étendant depuis la partie centrale de l'inducteur 3 jusqu'en périphérie de l'inducteur 3, et six autres barreaux 8 en matériau magnétique s'étendant respectivement entre les six premiers barreaux 8 en matériau magnétique, et en particulier sur la zone périphérique de l'inducteur 3.

Dans un mode de réalisation, le support d'inducteur 4 est maintenu sur un plateau 9.

Préférentiellement, ce plateau 9 est en matériau amagnétique, tel que par exemple en aluminium, permettant de minimiser les champs parasites de l'inducteur 3 de sorte à protéger les moyens de commande, du type électronique, de la table de cuisson à induction 1 servant à commander le ou les foyers de cuisson à induction 2.

Ce plateau 9 peut également permettre de dissiper la chaleur émise par l'inducteur 3 lors de sa mise en fonctionnement ainsi que par les moyens de commande de la table de cuisson à induction 1.

Le support d'inducteur 4 est positionné sur la face supérieure du plateau 9.

Le plateau 9 peut ainsi permettre de supporter le support d'inducteur 4 et l'inducteur 3.

Le support d'inducteur 4 comprend une ouverture 10 située de préférence au centre de l'inducteur et positionnée en vis-à-vis d'une ouverture 11 du plateau 9 permettant le passage d'un capteur de température (non représenté) et de ses fils de connexion de sorte à connecter ce capteur de température aux moyens de commande de la table de cuisson à induction 1.

Le support d'inducteur 4 comporte sur sa face supérieure 4a une gorge 12 en forme de spirale recevant le conducteur 5.

L'inducteur 3 peut ainsi être de toute forme, et en particulier de forme circulaire, elliptique ou carrée.

Le conducteur 5 comprend une première extrémité libre 5a sortant de la gorge 12 sur la périphérie 4c du support d'inducteur 4 et une deuxième extrémité libre 5b sortant de la gorge 12 en partie centrale 4d du support d'inducteur 4.

Avantageusement, la deuxième extrémité libre 5b du conducteur 5 est guidée dans un logement 13 ménagé dans la face inférieure 4b du support d'inducteur 4.

Ainsi, le logement 13 ménagé sur la face inférieure 4b du support d'inducteur 4 permet de disposer la deuxième extrémité libre 5b du conducteur 5 à l'intérieur du support d'inducteur 4.

De cette manière, la face inférieure 4b du support d'inducteur 4 peut être plaquée contre la face supérieure 9a du plateau 9.

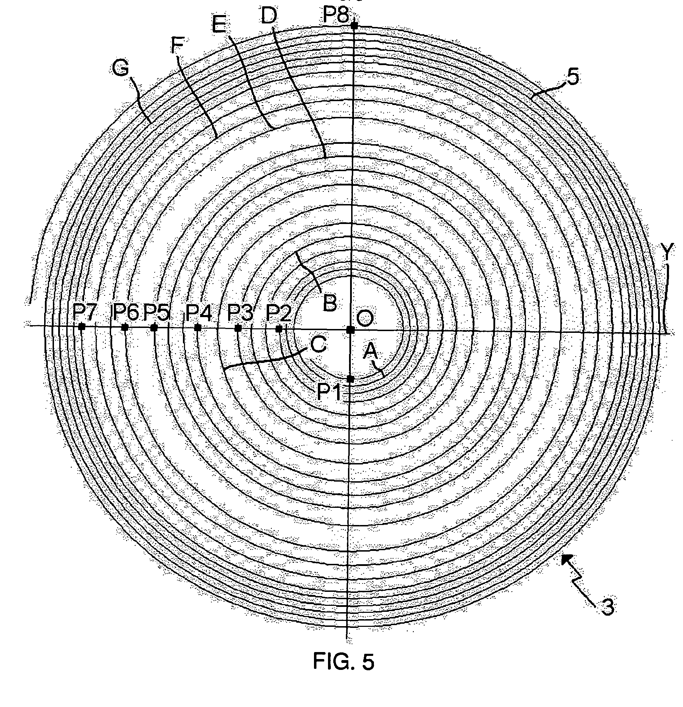

On va décrire à présent, en référence à la figure 5, un inducteur d'un foyer de cuisson à induction conforme à un mode de réalisation de l'invention.

L'inducteur 3 comporte le conducteur 5 enroulé en forme de spirale plane. La spirale du conducteur 5 comprend des sections de spires A, B, C, D, E, F, G.

Une pluralité des sections de spires A, B, C, D, F, G comprennent respectivement plusieurs spires espacées d'un pas d'enroulement constant.

Le pas d'enroulement constant d'une section de spires est variable par rapport à au moins une autre section de spires.

Des sections de spires interne et externe A, G de la spirale du conducteur 5 situées respectivement en partie centrale de l'inducteur 3 et en périphérie de l'inducteur 3 comprennent une pluralité de spires espacées d'un pas d'enroulement constant et inférieur au pas d'enroulement constant respectif d'une pluralité de sections de spires intermédiaires B, C, D, E, F de la spirale du conducteur 5, lesdites sections de spires intermédiaires B, C, D, E, F de la spirale du conducteur 5 étant disposée entre les sections de spires interne et externe A, G de la spirale du conducteur 5.

Ainsi, le foyer de cuisson à induction 2 comprenant un tel inducteur 3 permet de distribuer une densité de courants électriques induits associée à chaque zone de fond du récipient de sorte à optimiser la répartition de chaleur sur toute la surface de fond d'un récipient.

La section de spires interne A de la spirale du conducteur 5, située en partie centrale de l'inducteur 3 comprenant une pluralité de spires espacées d'un pas d'enroulement constant inférieur au pas d'enroulement constant respectif d'une pluralité de sections de spires intermédiaires B, C, D, E, F, permet d'augmenter la densité de courants électriques induits au niveau d'une couronne centrale de fond d'un récipient par rapport à une couronne intermédiaire du fond de récipient disposée entre la couronne centrale et une couronne externe de fond du récipient.

De cette manière, la quantité de chaleur fournie au niveau d'une couronne centrale de fond du récipient est supérieure à la quantité de chaleur fournie au niveau d'une couronne intermédiaire de fond du récipient de sorte d'une part à palier à la densité de courants électriques induits quasi nulle au centre de l'inducteur 3 puisque, selon le principe de l'électromagnétisme, aucun courant électrique induit n'est généré au centre d'un tel inducteur 3, et les spires du conducteur 5 disposées au centre de l'inducteur 3 engendrent des courants électriques induits faibles étant donné le faible diamètre de ces spires, et d'autre part à diffuser la chaleur par conductivité thermique sur toute la couronne centrale de fond du récipient puis sur la couronne intermédiaire de fond du récipient.

La section de spires externe G de la spirale du conducteur 5, située en périphérie de l'inducteur 3 comprenant une pluralité de spires espacées d'un pas d'enroulement constant inférieur au pas d'enroulement constant respectif d'une pluralité de sections de spires intermédiaires B, C, D, E, F, permet d'augmenter la densité de courants électriques induits au niveau d'une couronne externe de fond d'un récipient par rapport à une couronne intermédiaire du fond de récipient disposée entre une couronne centrale et la couronne externe de fond du récipient.

De cette manière, la quantité de chaleur fournie au niveau d'une couronne externe de fond du récipient est supérieure à la quantité de chaleur fournie au niveau d'une couronne intermédiaire de fond du récipient de sorte d'une part à palier aux pertes de chaleur provoquées par le rebord périphérique du récipient, et d'autre part à diffuser la chaleur par conductivité thermique sur toute la couronne externe de fond du récipient puis sur la couronne intermédiaire de fond du récipient.

La pluralité de sections de spires intermédiaires B, C, D, E, F de la spirale du conducteur 5, située en partie intermédiaire de l'inducteur 3 comprenant respectivement une ou plusieurs spires espacées d'un pas d'enroulement constant supérieur au pas d'enroulement constant des sections de spires interne et externe A, G de la spirale du conducteur 5 situées respectivement en partie centrale de l'inducteur 3 et en périphérie de l'inducteur 3, permet de répartir la densité de courants électriques induits au niveau d'une couronne intermédiaire de fond d'un récipient depuis une densité de courants électriques induits au niveau d'une couronne centrale de fond du récipient jusqu'à une densité de courants électriques induits au niveau d'une couronne externe de fond du récipient.

De cette manière, la quantité de chaleur fournie au niveau d'une couronne intermédiaire de fond du récipient est inférieure à la quantité de chaleur fournie au niveau d'une couronne centrale et d'une couronne externe de fond du récipient de sorte à uniformiser la répartition de chaleur sur toute la surface de fond du récipient en prenant en considération la diffusion de chaleur par conductivité thermique provenant de la couronne centrale et de la couronne externe de fond du récipient.

Préférentiellement, la densité de courants électriques induits entre une première section de spires intermédiaire B de la spirale du conducteur 5, ladite première section de spires intermédiaire B étant adjacente à la section de spires interne A de la spirale du conducteur 5, et la section de spires externe G de la spirale du conducteur 5 est croissante.

Ainsi, la quantité de chaleur fournie par la première section de spires intermédiaire B de la spirale du conducteur 5 est inférieure à la quantité de chaleur fournie par la section de spires interne A de la spirale du conducteur 5 et la quantité de chaleur fournie par les sections de spires intermédiaires suivantes C, D, E, F est croissante jusqu'à la section de spires externe G de la spirale du conducteur 5 de sorte à uniformiser la répartition de chaleur sur toute la surface de fond du récipient en prenant en considération la diffusion de chaleur par conductivité thermique provenant de la couronne centrale et de la couronne externe de fond du récipient.

A titre d'exemple nullement limitatif, la densité de courants électriques induits entre la première section de spires intermédiaire B de la spirale du conducteur 5 et la section de spires externe G de la spirale du conducteur 5 est linéairement croissante.

Dans un mode de réalisation, tel qu'illustré à la figure 5, le pas d'enroulement constant des sections de spires interne et externe A, G de la spirale du conducteur 5 est identique.

Dans un mode de réalisation amélioré, en outre, la section de spires externe G de la spirale du conducteur 5 comprend un nombre de spires supérieur par rapport au nombre de spires de la section de spires interne A de la spirale du conducteur 5.

Ainsi, la densité de courants électriques induits au niveau d'une couronne externe de fond d'un récipient est supérieure par rapport à la densité de courants électriques induits au niveau d'une couronne centrale de fond d'un récipient de sorte d'une part à palier aux pertes de chaleur provoquées par le rebord périphérique du récipient et d'autre part à améliorer la répartition de chaleur sur toute la surface de répartition de fond du récipient.

Préférentiellement, les sections de spires A, B, C, D, E, F, G de la spirale du conducteur 5 s'enchaînent les unes après les autres.

Ainsi, la densité de courants électriques induits engendrée par l'ensemble des sections de spires A, B, C, D, E, F, G est continue de sorte à éviter que la répartition de chaleur sur les différentes zones de fond d'un récipient ne comprenne des variations de température liées à des espaces entre deux sections de spires consécutives.

De cette manière, la distance entre deux spires de deux sections de spires consécutives est comprise entre la valeur du pas d'enroulement constant d'une première section de spires et la valeur du pas d'enroulement constant d'une deuxième section de spires, où le pas d'enroulement constant de chacune des deux sections de spires consécutives est différent.

Par conséquent, cette distance entre deux spires de deux sections de spires consécutives n'est ni inférieure à la valeur du pas d'enroulement le plus petit d'une des deux sections de spires consécutives, ni supérieure à la valeur du pas d'enroulement constant le plus grand d'une des deux sections de spires consécutives.

Dans un mode de réalisation, le point d'enchaînement P2 entre la section de spires interne A de la spirale du conducteur 5 et une des sections de spires intermédiaires B de la spirale du conducteur 5, ainsi que le point d'enchaînement P7 entre une des sections de spires intermédiaires F et la section de spires externe G de la spirale du conducteur 5 se situent le long d'un même axe Y passant par le centre O de l'inducteur 3.

Dans un mode de réalisation, chaque section de spires A, B, C, D, E, F, G comprend un nombre de spires variable par rapport à au moins une section de spires adjacente.

Ainsi, la densité de courants électriques induits est adaptée à chaque partie de l'inducteur 3 de sorte à améliorer l'uniformité de la répartition de chaleur sur toute la surface de répartition de fond du récipient.

Avantageusement, chaque section de spires intermédiaire B, C, D, E, F comprend une ou plusieurs spires espacées d'un pas d'enroulement constant et différent par rapport à au moins une section de spires intermédiaire adjacente.

Ainsi, lorsque les différentes sections de spires intermédiaires B, C, D, E, F de la spirale du conducteur 5 ont une ou plusieurs spires espacées d'un pas d'enroulement constant et différent par rapport à au moins une section de spires intermédiaire adjacente, la densité de courants électriques induits peut tendre vers une densité de courants électriques induits croissante depuis la première section de spires intermédiaire B de la spirale du conducteur 5 jusqu'à la section de spires externe de la spirale du conducteur 5.

Dans un mode de réalisation amélioré, en outre, chaque section de spires intermédiaire B, C, D, E, F comprend un nombre de spires variable par rapport au nombre de spires d'au moins une section de spires intermédiaire adjacente.

Ainsi, lorsque les différentes sections de spires intermédiaires B, C, D, E, F de la spirale du conducteur 5 ont une pluralité de spires espacées d'un pas d'enroulement constant et variable par rapport à au moins une section de spires intermédiaire adjacente et que chaque section de spires intermédiaire B, C, D, E, F comprend un nombre de spires variable par rapport à au moins une section de spires intermédiaire adjacente, la linéarité de la croissance de la densité de courants électriques induits engendrée par les différentes sections de spires intermédiaires B, C, D, E, F de la spirale du conducteur 5 depuis la première section de spires intermédiaire B de la spirale du conducteur 5 jusqu'à la section de spires externe de la spirale du conducteur 5 est améliorée.

En outre, la densité de courants électriques induits croissante entre une première section de spires intermédiaire de la spirale du conducteur, ladite première section de spires intermédiaire étant adjacente à la section de spires interne de la spirale du conducteur, et la section de spires externe de la spirale du conducteur peut ainsi être mise en oeuvre au moyen de la variation du nombre de spires d'une section de spires intermédiaire par rapport à au moins une section de spires intermédiaire adjacente.

Dans un mode de réalisation, les points d'enchaînement P3, P4, P5, P6 entre les sections de spires intermédiaires B, C, D, E, F de la spirale du conducteur 5 se situent le long d'un même axe Y passant par le centre O de l'inducteur 3.

Dans un mode de réalisation, chaque section de spires intermédiaire comprend un nombre de spires et un pas d'enroulement constant différents par rapport à au moins une section de spires intermédiaire adjacente.

Ainsi, la variation du nombre de spires et du pas d'enroulement constant entre les différentes sections de spires intermédiaires permet d'optimiser la répartition de densité de courants électriques induits et l'impédance d'un inducteur 3 de manière souple et précise.

On va décrire à présent un exemple de réalisation de bobinage d'un conducteur, tel qu'illustré à la figure 5, pour un inducteur de diamètre extérieur de l'ordre de 280mm.

Bien entendu, cet exemple de réalisation n'est nullement limitatif et l'invention peut être mise en oeuvre pour des inducteurs de diamètres différents.

Tout d'abord, la deuxième extrémité libre 5b conducteur 5 est introduite dans l'ouverture 17 du support d'inducteur 4 puis insérée dans la gorge 12 du support d'inducteur 4. Et le bobinage du conducteur 5 de l'inducteur 3 dans la gorge 12 du support d'inducteur 4 se poursuit suivant les différentes sections de spires décrites ci-après. La section de spires interne A de la spirale du conducteur 5 comprend deux spires trois quart avec un pas d'enroulement constant de l'ordre de 3,2mm depuis le point P1 jusqu'au point P2. Les sections de spires intermédiaires B, C, D, E, F de la spirale du conducteur 5 comprennent respectivement trois spires avec un pas d'enroulement constant de l'ordre de 6mm depuis le point P2 jusqu'au point P3, deux spires avec un pas d'enroulement constant de l'ordre de 9mm depuis le point P3 jusqu'au point P4, trois spires avec un pas d'enroulement constant de l'ordre de 6mm depuis le point P4 jusqu'au point P5, une spire avec un pas d'enroulement de l'ordre de 13,2mm depuis le point P5 jusqu'au point P6, trois spires avec un pas d'enroulement constant de l'ordre de 6,4mm depuis le point P6 jusqu'au point P7. La section de spires externe G de la spirale du conducteur 5 comprend cinq spires trois quart avec un pas d'enroulement constant de l'ordre de 3,2mm depuis le point P7 jusqu'au point P8. Puis, le bobinage du conducteur 5 de l'inducteur 3 dans la gorge 12 du support d'inducteur 4 se termine de sorte que la première extrémité libre 5a du conducteur 5 sorte sur la périphérie 4c du support d'inducteur 4.

Bien entendu, le nombre de spires et le pas d'enroulement de chaque section de spires ne sont nullement limitatifs et peuvent être différents.

Dans un mode de réalisation, tel qu'illustré à la figure 1, le support d'inducteur 4 comprend un moyen de fixation 14 de la deuxième extrémité libre 5b du conducteur 5 disposé entre la partie centrale 4d du support d'inducteur 4 et la périphérie 4c du support d'inducteur 4.

Le moyen de fixation 14 permet de maintenir et d'orienter la deuxième extrémité libre 5b du conducteur 5 en fonction de la position d'un moyen de raccordement 15 d'un générateur 16 de la table de cuisson à induction 1 coopérant avec la deuxième extrémité libre 5b du conducteur 5, et de maintenir et d'orienter la deuxième extrémité libre 5b du conducteur 5 dans une zone située entre la partie centrale 4d du support d'inducteur 4 et la périphérie 4c du support d'inducteur 4.

Ici et de manière nullement limitative, le moyen de fixation 14 du support d'inducteur 4 est un crochet.

Dans un mode de réalisation, le crochet 14 est réalisé par moulage du support d'inducteur 4.

La deuxième extrémité libre 5b du conducteur 5 s'étend depuis la partie centrale 4d du support d'inducteur 4 jusqu'au moyen de fixation 14 du support d'inducteur 4 en passant au travers d'une ouverture 17 ménagée dans la partie centrale 4d du support d'inducteur 4 puis en se logeant dans le logement 13 ménagé dans la face inférieure 4b du support d'inducteur 4.

Avantageusement, les première et deuxième extrémités libres 5a, 5b du conducteur 5 comprennent respectivement à leur bout un élément de fixation 19, tel que par exemple une cosse, coopérant avec un moyen de raccordement 15 d'un générateur 16.

Ici et de manière nullement limitative, le moyen de raccordement 15 du générateur 16 est un plot sur lequel une cosse 19 fixée sur le bout d'une des deux extrémités libres 5a, 5b du conducteur 5 peuvent être fixés ensemble au moyen d'une vis de fixation.

Le générateur 16 du foyer de cuisson à induction 2 comprend classiquement un dispositif d'alimentation à onduleur, mettant notamment en oeuvre au moins un interrupteur de puissance du type transistor bipolaire tel qu'un transistor IGBT (acronyme du terme anglo-saxon « Insulated Gate Bipolar Transistor ») ou un transistor MOS (acronyme du terme anglo-saxon « Metal Oxyde Semiconductor »).

Le dispositif à onduleur peut avoir une structure électronique de puissance en demi-pont ou une structure d'électronique de puissance en circuit quasi résonnant.

Il n'est pas nécessaire ici de décrire plus en détail le dispositif d'alimentation à onduleur bien connu pour l'alimentation des inducteurs d'une table de cuisson à induction.

De préférence, le plateau 9 comprend une première ouverture 20 pour le passage de la première extrémité libre 5a du conducteur 5 depuis la périphérie 4c du support d'inducteur 4 vers un moyen de raccordement 15 du générateur 16, et une deuxième ouverture 20 pour le passage de la deuxième extrémité libre 5b du conducteur 5 depuis le moyen de fixation 14 du support d'inducteur 4 vers un moyen de raccordement 15 du générateur 16.

Préférentiellement, le moyen de fixation 14 du support d'inducteur 4 est ménagé dans une section de spires E de la spirale du conducteur 5, et en particulier entre deux spires de la gorge 12 en forme de spirale du support d'inducteur 4.

L'aménagement d'un tel moyen de fixation 14 sur un support d'inducteur 4 peut engendrer de modifier le positionnement des spires de l'inducteur 3.

Préférentiellement, le moyen de fixation 14 du support d'inducteur 4 est disposé dans une section de spires intermédiaire E de la spirale du conducteur 5 de sorte à limiter l'influence de la répartition de chaleur sur la surface de fond d'un récipient.

Dans un mode de réalisation, le support d'inducteur 4 comprend une ouverture 18 au niveau du crochet 14 de sorte à maintenir la deuxième extrémité libre 5b du conducteur 5 entre la face supérieure 14a du crochet 14 et la face inférieure 4b du support d'inducteur 4.

Grâce à la présente invention, le foyer de cuisson à induction permet de distribuer une densité de courants électriques induits associée à chaque zone de fond du récipient de sorte à optimiser la répartition de chaleur sur toute la surface de fond d'un récipient.

Bien entendu, la présente invention n'est pas limitée à l'exemple de réalisation décrit précédemment.

En particulier, le nombre de sections de spires intermédiaires n'est nullement limité à l'exemple de réalisation décrit précédemment et peut être différent.

## Revendications

1. Foyer de cuisson à induction (2) comprenant un inducteur (3), ledit inducteur (3) comportant un conducteur (5) enroulé en forme de spirale plane, ladite spirale dudit conducteur (5) comprenant des sections de spires (A, B, C, D, E, F, G), une pluralité desdites sections de spires (A, B, C, D, F, G) comprenant respectivement plusieurs spires espacées d'un pas d'enroulement constant, le pas d'enroulement constant d'une sections de spires est variable par rapport à au moins une autre section de spires; ledit inducteur (3) dispose également des sections de spires interne et externe (A, G) de ladite spirale dudit conducteur (5) situées respectivement en partie centrale dudit inducteur (3) et en périphérie dudit inducteur (3) comprennent une pluralité de spires espacées d'un pas d'enroulement constant et inférieur au pas d'enroulement constant respectif d'une pluralité de sections de spires intermédiaires (B, C, D, E, F) de ladite spirale dudit conducteur (5), lesdites sections de spires intermédiaires (B, C, D, E, F) de ladite spirale dudit conducteur (5) étant disposées entre lesdites sections de spires interne et externe (A, G) de ladite spirale dudit conducteur (5), en ce que le pas d'enroulement constant desdites sections de spires interne et externe (A, G) de ladite spirale dudit conducteur (5) est identique, **caractérisé en ce que** ladite section de spires externe (G) de ladite spirale dudit conducteur (5) comprend un nombre de spires supérieur par rapport au nombre de spires de ladite section de spires interne (A) de ladite spirale dudit conducteur (5).

2. Foyer de cuisson à induction (2) selon la revendication 1, **caractérisé en ce que** les sections de spires (A, B, C, D, E, F, G) de ladite spirale dudit conducteur (5) s'enchaînent les unes après les autres.

3. Foyer de cuisson à induction (2) selon la revendication 1 ou 2, **caractérisé en ce que** chaque section de spires intermédiaire (B, C, D, E, F) comprend une ou plusieurs spires espacées d'un pas d'enroulement constant et différent par rapport à au moins une section de spires intermédiaire adjacente.

4. Foyer de cuisson à induction (2) selon la revendication 3, **caractérisé en ce que** chaque section de spires intermédiaire (B, C, D, E, F) comprend un nombre de spires variable par rapport au nombre de spires d'au moins une section de spires intermédiaire adjacente.

5. Foyer de cuisson à induction (2) selon l'une quelconque des revendications 1 à 4, **caractérisé en ce que** la densité de courants électriques induits entre une première section de spires intermédiaire (B) de ladite spirale dudit conducteur (5), ladite première section de spires intermédiaire (B) étant adjacente à ladite section de spires interne (A) de ladite spirale dudit conducteur (5), et ladite section de spires externe (G) de ladite spirale dudit conducteur (5) est croissante.

6. Foyer de cuisson à induction (2) selon l'une quelconque des revendications 1 à 5, **caractérisé en ce que** ledit foyer (2) comprend un support d'inducteur (4), ledit support d'inducteur (4) comportant sur sa face supérieure (4a) une gorge (12) en forme de spirale recevant ledit conducteur (5).

7. Foyer de cuisson à induction (2) selon la revendication 6, **caractérisé en ce que** ledit support d'inducteur (4) comprend une pluralité de barreaux (8) en matériau magnétique, en particulier des ferrites, maintenus radialement sur la face inférieure (4b) du support d'inducteur (4).

8. Table de cuisson à induction (1), **caractérisée en ce que** ladite table comprend au moins un foyer de cuisson à induction (2) conforme à l'une quelconque des revendications 1 à 7.

## Patentansprüche

1. Induktionskochfeld (2), einen Induktor (3) umfassend, wobei besagter Induktor (3) einen Wärmeleiter (5) umfasst, der in Form einer flachen Spirale aufgerollt ist, wobei besagte Spirale besagten Wärmeleiters (5) Abschnitte mit Windungen (A, B, C, D, E, F, G) umfasst, wobei eine Vielzahl besagter Abschnitte mit Windungen (A, B, C, D, E, F, G) jeweils mehrere Windungen mit konstantem Wickelschritt umfasst, wobei der konstante Wickelschritt eines Abschnitts mit Windungen in Bezug auf mindestens einen weiteren Abschnitt mit Windungen variabel ist; wobei besagter Induktor (3) weiterhin über interne und externe Windungen (A, G) besagter Spirale besagten Wärmeleiters (5) verfügt, die jeweils im zentralen Abschnitt besagten Induktors (3) und an der Peripherie besagten Induktors (3) angeordnet sind, eine Vielzahl von Windungen mit konstantem Wickelschritt umfassend, der geringer ist als der entsprechende konstante Wickelschritt einer Vielzahl von Abschnitten mit vermittelnden Windungen (B, C, D, E, F) besagter Spirale besagten Wärmeleiters (5), wobei besagte Abschnitte vermittelnder Windungen (B, C, D, E, F) besagter Spirale besagten Wärmeleiters (5) zwischen besagten internen und externen Abschnitten von Windungen (A, G) angeordnet sind, **dadurch gekennzeichnet, dass** der konstante Wickelschritt besagter Abschnitte externer und interner Windungen (A, G) besagter Spirale besagten Wärmeleiters (5) identisch ist, **dadurch gekennzeichnet, dass** besagter Abschnitt externer Windungen (G) besagter Spirale besagten Wärmeleiters (5) eine Anzahl von Windungen umfasst, die im Verhältnis zur Anzahl von Windungen besagten Abschnitts interner Windungen (A) besagter Spirale besagten Wärmeleiters (5) größer ist.

2. Induktionskochfeld (2) nach Anspruch 1, **dadurch gekennzeichnet, dass** die Abschnitte mit Windungen (A, B, C, D, E, F, G) besagter Spirale besagten Wärmeleiters (5) hintereinander angeordnet sind.

3. Induktionskochfeld (2) nach Anspruch 1 oder 2, **dadurch gekennzeichnet, dass** jeder Abschnitt mit vermittelnden Windungen (B, C, D, E, F) eine oder mehrere Windungen mit konstantem Wickelschritt umfasst, welcher in Bezug auf mindestens einen Abschnitt angrenzender vermittelnder Windungen unterschiedlich ist.

4. Induktionskochfeld (2) nach Anspruch 3, **dadurch gekennzeichnet, dass** jeder Abschnitt mit vermittelnden Windungen (B, C, D, E, F) eine in Bezug auf die Anzahl von Windungen mindestens eines angrenzenden Abschnitts mit vermittelnden Windungen variable Anzahl von Windungen umfasst.

5. Induktionskochfeld (2) nach einem jeglichen der Ansprüche 1 bis 4, **dadurch gekennzeichnet, dass** die Stromdichte des induzierten Stroms zwischen einem ersten Abschnitt von vermittelnden Windungen (B) besagter Spirale besagten Wärmeleiters (5), wobei besagter erster Abschnitt vermittelnder Windungen (B) an besagten Abschnitt interner Windungen (A) besagter Spirale besagten Wärmeleiters (5) grenzt, und besagtem Abschnitt externer Windungen (G) besagter Spirale besagten Wärmeleiters (5) zunehmend ist.

6. Induktionskochfeld (2) nach einem jeglichen der Ansprüche 1 bis 5, **dadurch gekennzeichnet, dass** besagtes Induktionskochfeld (2) einen Induktorträger (4) umfasst, wobei besagter Induktorträger (4) auf seiner oberen Seite (4a) eine Rille (12) in Form einer Spirale hat, die besagten Wärmeleiter (5) aufnimmt.

7. Induktionskochfeld (2) nach Anspruch 6, **dadurch gekennzeichnet, dass** besagter Induktionsträger (4) eine Vielzahl von Wafern (8) aus magnetischem Material umfasst, bei dem es sich konkret um Ferrit handelt, radial auf der Unterseite (4b) des Induktionsträgers (4) angeordnet.

8. Induktionsherdplatte (1), **dadurch gekennzeichnet, dass** besagte Platte mindestens ein Induktionskochfeld (2) nach einem jeglichen der Ansprüche 1 bis 7 umfasst.

## Claims

1. An induction cooking zone (2) comprising an inductor (3), said inductor (3) comprising a conductor (5) wound in the form of a flat spiral, said spiral of said conductor (5) comprising sections of turns (A, B, C, D, E, F, G), a plurality of said sections of turns (A, B, C, D, F, G) respectively comprising multiple turns spaced apart at a constant winding pitch, the constant winding pitch of a section of turns is variable with respect to at least one other section of turns; said inductor (3) also has inner and outer sections of turns (A, G) of said spiral of said conductor (5) respectively located in the central part of said inductor (3) and on the periphery of said inductor (3) comprise a plurality of turns spaced apart at a constant winding pitch less than the respective constant winding pitch of a plurality of sections of middle section of turns (B, C, D, E, F) of said spiral of said conductor (5), said middle section of turns (B, C, D, E, F) of said spiral of said conductor (5) being disposed between said inner and outer sections of turns (A, G) of said spiral of said conductor (5), in that the constant winding pitch of said inner and outer sections of turns (A, G) of said spiral of said conductor (5) is identical, **characterized in that** said outer section of turns (G) of said spiral of said conductor (5) comprises a number of turns greater than the number of turns of said inner section of turns (A) of said spiral of said conductor (5).

2. An induction cooking zone (2) according to claim 1, **characterized in that** the sections of turns (A, B, C, D, E, F, G) of said spiral of said conductor (5) are sequential.

3. An induction cooking zone (2) according to claim 1 or 2, **characterized in that** each middle section of turns (B, C, D, E, F) comprises one or more turns spaced apart by a constant winding pitch different from at least one adjacent middle section of turns.

4. An induction cooking zone (2) according to claim 3, **characterized in that** each middle section of turns (B, C, D, E, F) comprises a number of turns that varies regarding the number of turns of at least one adjacent middle section of turns.

5. An induction cooking zone (2) according to any one of the claims 1 to 4, **characterized in that** the density of electrical currents induced between a first middle section of turns (B) of said spiral of said conductor (5), said first middle section of turns (B) being adjacent to said inner section of turns (A) of said spiral of said conductor (5), and said outer section of turns (G) of said spiral of said conductor (5) is increasing.

6. An induction cooking zone (2) according to any one of the claims 1 to 5, **characterized in that** said zone (2) comprises an inductor mount (4), said inductor mount (4) comprising on its upper surface (4a) a spiral-shaped slot (12) received said conductor (5).

7. An induction cooking zone (2) according to claim 6, **characterized in that** said inductor mount (4) comprises a plurality of bars (8) made of a magnetic material, in particular ferrites, held radially against the lower surface (4b) of said inductor mount (4).

8. An induction cooking hob (1) **characterized in that** said hob comprises at least one induction cooking hob (2) compliant with any one of the claims 1 to 7.
